# EUROPEAN PATENT APPLICATION

(11) **EP 0 696 828 A1**
(43) Date of publication of application: **14.02.1996**
(21) Application number: 95112244.9
(22) Date of filing: 03.08.1995
(51) Int. Cl.: H01R 13/629

(54) **Charge connector for electric vehicles**

(30) Priority: 08.08.1994 JP 207968/94
(71) Applicant: SUMITOMO WIRING SYSTEMS, LTD., Yokkaichi City Mie 510 (JP)
(72) Inventor: Ito, Hikaru, c/o Sumitomo Wiring Systems, Ltd., Yokkaichi-City, Mie, 510 (JP); Saito, Masashi, c/o Sumitomo Wiring Systems, Ltd., Yokkaichi-City, Mie, 510 (JP); Saijo, Eiji, c/o Sumitomo Wiring Systems, Ltd., Yokkaichi-City, Mie, 510 (JP); Yamada, Shinichi, c/o Sumitomo Wiring Systems, Ltd, Yokkaichi-City, Mie, 510 (JP)
(74) Representative: Müller-Boré & Partner Patentanwälte

(57) **Abstract**

A grip shaft 32 extends substantially in the longitudinal direction of a charge connector 2 at its rear side, and a lever 33 to be gripped with the grip shaft 32 is mounted on the grip shaft 32. The connector 2 is connected to a vehicle side connector 1 while positioning a hand gripping the grip shaft 32 on the longitudinal axes of the connectors 1 and 2. The lever 33 is connected with a connection assisting means 36 for assisting the connection of the connectors 1 and 2 by relatively moving the connector 2 closer to the connector 1 as the lever 33 is gripped more until the connectors 1 and 2 are fully connected. The connection assisting means 36 assists the connection of the connectors 1 and 2 by causing the connectors 1 and 2 to move closer to each other by gripping the lever 33 together with the grip shaft 32. The connectors 1 and 2 are fully connected when the lever 33 is fully gripped. Thereby, a burden on a wrist of the operator during the connection of a vehicle-side connector 1 and a charge connector 2 can be reduced even if the vehicle-side connector 1 is horizontally mounted in a relatively low position.

## Description

### DETAILED DESCRIPTION OF THE INVENTION

The present invention relates to a charge connector for electric vehicles.

For some years now, it is expected that electric vehicles be put to practical use. In this case, the charging of a battery is an inevitable problem. A charge connector is one of the important factors which are associated with the charging of the battery and require a further examination. This charge connector is to be connected with a vehicle-side connector to be secured on a vehicle and a charger, respectively. The charge connector needs to assuredly satisfy the following two conditions: it has an excellent operability, and it ensures a safe charging operation despite a relatively large amount of current to be used.

When examining the operability in connecting the vehicle-side connector and the charge connector, the height and the direction of the vehicle-side connector are critical. Although there are not yet any determined standards, it is desirable that a connecting surface of the vehicle-side connector with the charge-side connector extend at least in the vertical direction in order to avoid the entry of dripping water during the charging operation as far as possible. It is also expected to mount the vehicle-side connector at the height of the waist of a normal adult person similar to gas tank openings of presently used gasoline driven vehicles.

In the case where the vehicle-side connector should be mounted as above, the operability would be poor if a so-called gun type charge connector were adopted which has a downward extending grip as a gas feeding gun and which is presently used at gas stations. With the gun type charge connector, a driver needs to hold the grip of the charge connector below the vehicle-side connector. Thus, the driver has to bend his wrist at a larger angle, thereby exerting a large burden on his wrist.

In terms of safety, it is necessary, for example, to make it impossible for the both connectors to be detached from each other until a charging circuit is opened even after the completion of the charging operation. If the connectors are detached while the charging circuit is closed, a fine spark may be generated between terminals when the terminals are displaced. This deteriorates the quality of the terminals due to oxidation.

The present invention was developed in view of the above problems, and an object thereof is to provide a charge connector for electric vehicles having an excellent operability and displaying an excellent safety by adopting a charge connector of a new type other than a gun type and making a new elaboration in terms of safety.

The above object is accomplished by the invention defined in claim 1.

Since the grip shaft extends substantially in the longitudinal direction at the rear side of the charge connector, the vehicle-side and the charge connectors are connected while positioning a hand gripping the grip shaft on the longitudinal axes of the connectors. When the lever is gripped with the grip shaft, the connection assisting means assists the connection of the connectors by causing the connectors to move closer to each other. When the lever is fully gripped, the connectors are fully connected.

Accordingly, the operator does not need bend his wrist at a large angle compared with a gun type charge connector even if the vehicle-side connector is horizontally mounted at a relatively low position. Thus, the wrist will be burdened to a less extent.

Preferably, the connector is provided with locking means for locking the lever in its full grip position. Since the lever is locked in its full grip position by the locking means, the connectors are kept fully connected even if the operator does not grip the lever during the charging operation. This prevents the displacement of the connectors during the charging operation and reduces the burden on the operator.

It is further preferred that the charge connector further comprises switch means which is operated to open and close a charging circuit for supplying a charging current to the battery of the vehicle. The switch means preferably has on- and off-positions for closing and opening the charging circuit, respectively and a return-position, next to the off-position, where the locking means is released.

Accordingly, power application to the battery is stopped by moving the switch means from its on-position to its off-position after the completion of the charging operation. When the switch means is moved from its off-position to its return-position, the locking means is released to release the lever from its full grip position, thereby enabling the detachment of the connectors.

Conclusively, the lever is kept locked by the locking means unless the switch means is moved to its return-position after the charging circuit is opened. Thus, the connectors are detached only after the power application is securely stopped.

These and other objects, features and advantages of the present invention will become more apparent upon a reading of the following detailed description and accompanying drawings in which:
FIG. 1 is a vertical section of a charge connector before the connection of a vehicle-side connector and a charge connector,
FIG. 2 is a vertical section of the charge connector when the vehicle-side connector and the charge connector are fully connected,
FIG. 3 is a vertical section of the charge connector when a slide switch is in its on-position,
FIG. 4 is a vertical section of the charge connector when the slide switch is in its return-position,
FIGS. 5(A), 5(B), and 5(C) are plan views partially in section of the charge connector during the normal time, during the contractive deformation of stays 36, and during a pull-in operation by the stays 36, respectively,
FIGS. 6(A), 6(B), and 6(C) are horizontal sections of the slide switch in its off-position, in its on-position, and in its return-position, respectively,
FIGS. 7(A) and 7(B) are enlarged horizontal sections of a guide recess and its surrounding elements when the stay is open, and when the stay is contractively deformed, and
FIG. 8 is a circuit diagram of a charging circuit.

Hereafter, one embodiment of the invention is described in detail with reference to the accompanying drawings. A charge connector 2 connected with a charger is connectable with a vehicle-side connector 1. The vehicle-side connector 1 is first described. A charge terminal 5 connected with a battery 4 and a signal terminal 6 for detecting a charged state, etc are mounted in a cylindrical housing 3. A spring biased lid 8 is mounted on the upper surface of the housing 3 via a bracket 7. The lid 8 opens and closes an opening in the housing 3, and seals this opening by means of a seal ring 9 mounted on the inner surface thereof. A torsion spring 11 is externally mounted on a mount shaft 10 of the lid 8 for biasing the lid 8 in such a direction as to reveal the opening. Although not shown in detail, the lid 8 is provided with a stopper for restricting an open position of lid 8 to an angular position normal to the housing 3.

On the other hand, a locking mechanism for holding the lid 8 in its closing position is provided below the housing 3. The locking mechanism is constructed as follows. An operation shaft 13 with a built-in return spring 12 is mounted in the lower part of the housing 3 such that it extends in the horizontal direction and can be pressed into a guide hole. A stopper shaft 14 is so mounted to cross the operation shaft 13 at right angles. The stopper shaft 14 is engageable and disengageable with and from a claw 15 of the lid 8. Although not shown in detail, the stopper shaft 14 is fitted in a groove (not shown) formed in the operation shaft 13 such that it extends in the vertical direction. Further, a projection 17 formed on the outer surface of the stopper shaft 14 is engaged with a cam groove 18 in the form of a through hole formed in the operation shaft 13. The stopper shaft 14 is moved upward and downward while being guided by the cam groove 18 when the operation shaft 13 is pressed into and pulled out of the guide hole.

Next, the charge connector 2 is described. A housing 19 of the charge connector 2 is a double-walled cylindrical structure having outer and inner housings 19a and 19b. A helical spring 20 is mounted between the outer and inner housings 19a and 19b such that it can be brought into contact with an opening edge of the vehicle-side connector 1. The spring 20 assists to detach the connectors 1 and 2 from each other. Terminals 21 and 22 corresponding to the charge terminal 5 and the signal terminal 6 of the vehicle-side connector 2, respectively, are mounted in the inner housing 19a. The respective terminals 22 and 21 are connected with a power source of the charger via a cable 23.

On the upper surface of the outer housing 19b, there is mounted a spring biased lid 24 for opening and closing an opening in the housing 19. More specifically, the lid 24 is rotatably mounted about a support pin 26 carried by a bearing 25 formed on the upper surface of the outer housing 19b. A torsion spring 27 is externally mounted on this support pin 26 to bias the lid 24 in a return direction (in a direction to close the housing 19). A lock member 28 for holding the lid 24 in its open position is mounted on the upper surface of a main body 29 formed behind and continuously with the housing 19. The leading end of the lock member 28 engages and disengages an engaging edge 30 formed at the lid 24. The lock member 28 is mounted on the main body 29 slidably in the forward/backward direction. Further, the lock member 28 is biased in such a direction as to lock the lid 24 by a spring 31 mounted therebehind.

A grip shaft 32 extends in the longitudinal direction backward from the main body 29. The grip shaft 32 is being gripped to connect the charge connector 2 with the vehicle-side connector 1. A lever 33 for facilitating the connection of the connectors 1 and 2 is rotatably mounted about a rotatable shaft 34 at the root of the grip shaft 32. A torsion spring 35 is externally mounted on the rotatable shaft 34 to bias the lever 33 in a direction away from the grip shaft 32. A pair of stays or pull bars or plates 36 which constitute a connection assisting means together with the lever 33 are connected with the lever 33. Specifically, the lever 33 is bent to have a substantially L-shaped form, and is connected with the stays 36 via a connecting pin 37 at its bent portion.

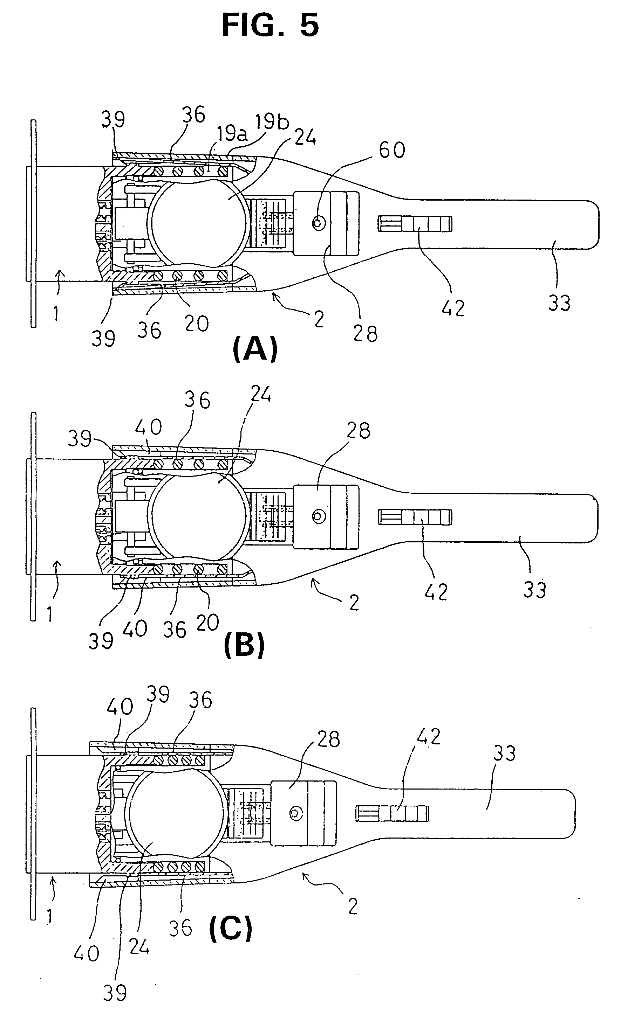

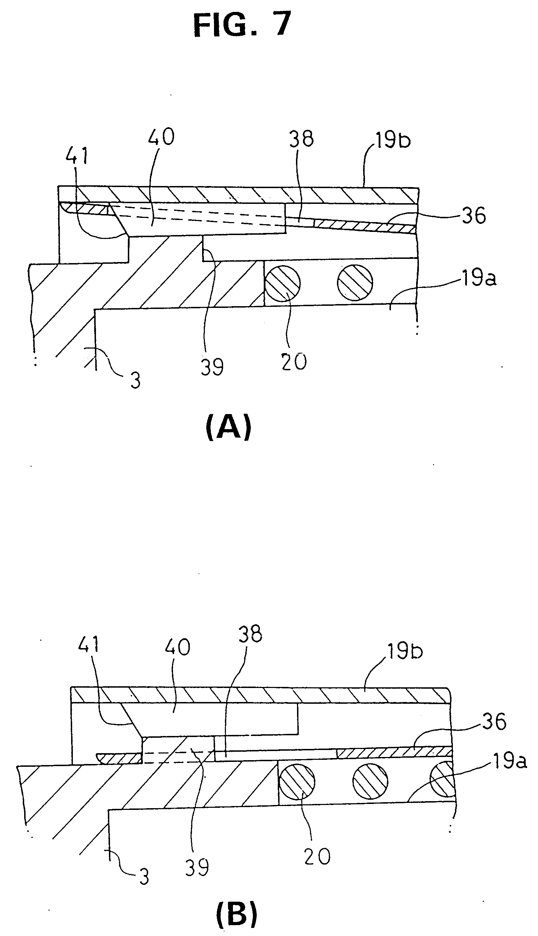

The stays 36 are inserted into the opposite lateral side portions of the clearance defined between the outer and inner housings 19a and 19b as shown in FIGS. 5(A) to 5(C). The stays 36 are each formed at their leading ends with an oblong engaging hole 38. The holes 38 are engageable with a pair of projections 39 formed on the outer surface of the housing 3 of the vehicle-side connector 1 (see FIGS. 7(A) and 7(b)). In order to avoid the interference of the stays 36 and the projections 39 during the connection of the connectors 1 and 2, the stays 36 are formed such that their leading ends are normally wide open as shown in FIG. 5(A), and guide projections 40 formed on the inner surface of the outer housing 19b are fitted in the respective engaging holes 38 (see FIG. 7(A)). However, when the lever 33 is gripped and the stays 36 move backward accordingly, the opening edges at the leading ends of the engaging holes 38 are forcibly caused to deform in a contracting direction along respective slanted surfaces 41 formed at the leading ends of the guide recesses 40. As a result, the stays 36 come into close contact with the outer surfaces of the vehicle-side connector 1. Although not shown in detail, when the stays 36 are caused to deform in the contracting direction in a partially retained state of the connectors 1 and 2 where the connectors 1 and 2 are engaged by a predetermined distance (partial engagement position), the engaging holes 38 engage the projections 39 of the vehicle-side connector 1. Thus, in this embodiment, the charge connector 2 is partially retained at the vehicle-side connector 1 in the partial engagement position by the engagement of the stays 36 and the projections 39.

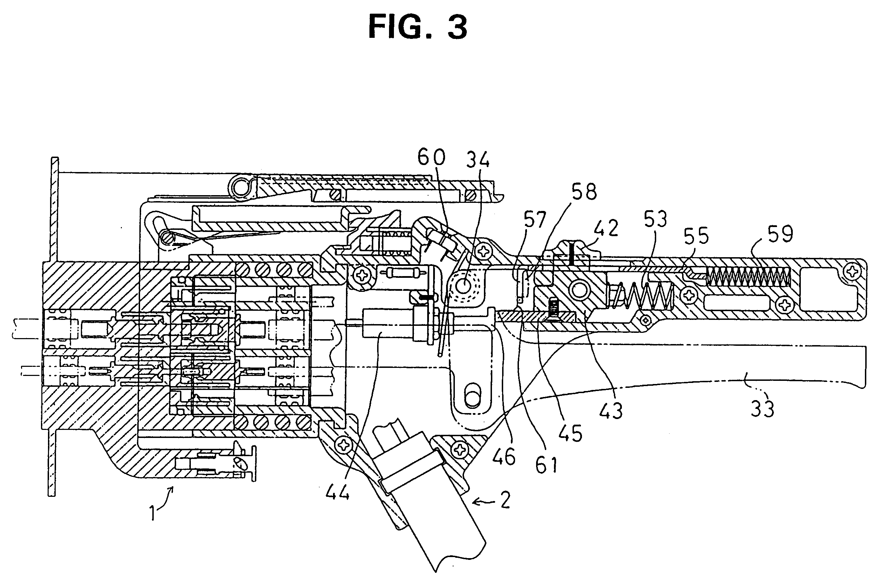

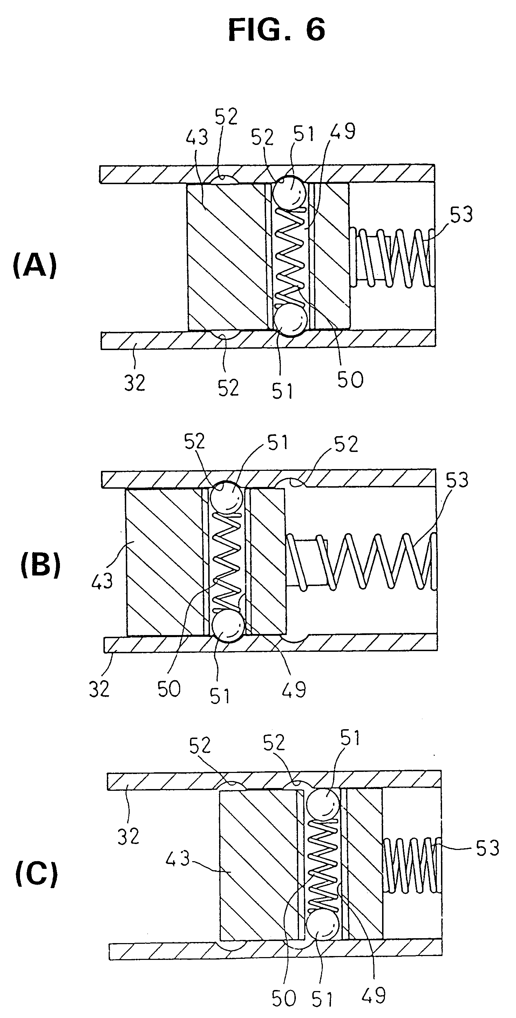

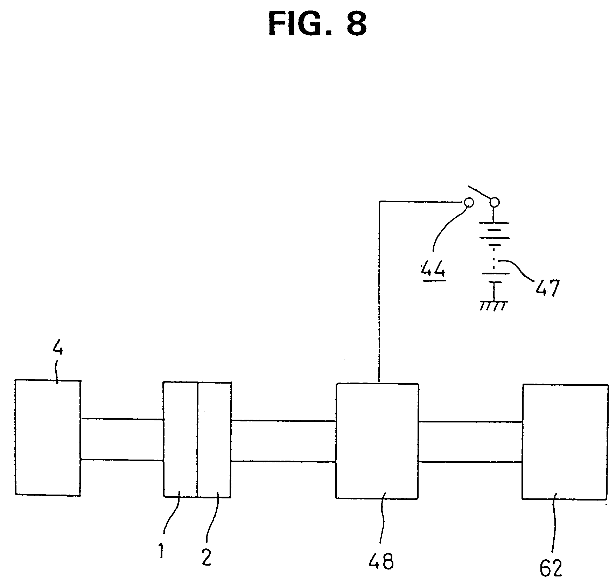

On the upper surface of the grip shaft 32, there is provided a slide switch 42 for opening and closing a charging circuit (to be described later) as shown in FIG. 8. The slide switch 42 includes a sliding member 43 provided inside the grip shaft 32, and a pressing plate 45 mounted on the lower surface of the sliding member 43 for pressing a micro-switch 44 as an element of the charging circuit. When the slide switch 42 is moved to its on-position (state shown in FIGS. 3 and 6(B)), the pressing plate 45 presses a contact 46 of the micro-switch 44.

The charging circuit is described with reference to FIG. 8. Between the charge connector 2 and a supply power source 47, there is provided a charging controller 48 (e.g., a relay circuit) for controlling the opening and closing of the charging circuit. When the slide switch 42 is moved to its on-position to turn the micro-switch 44 on, the micro-switch 44 outputs a signal for closing the charging circuit so as to connect the charging controller 48 with the power source 47. Only when the micro-switch 44 is closed (on), application of a charging current from a charger power source 62 is permitted. Conversely, when the micro-switch 44 is open (off), application of power to the charging circuit is prohibited.

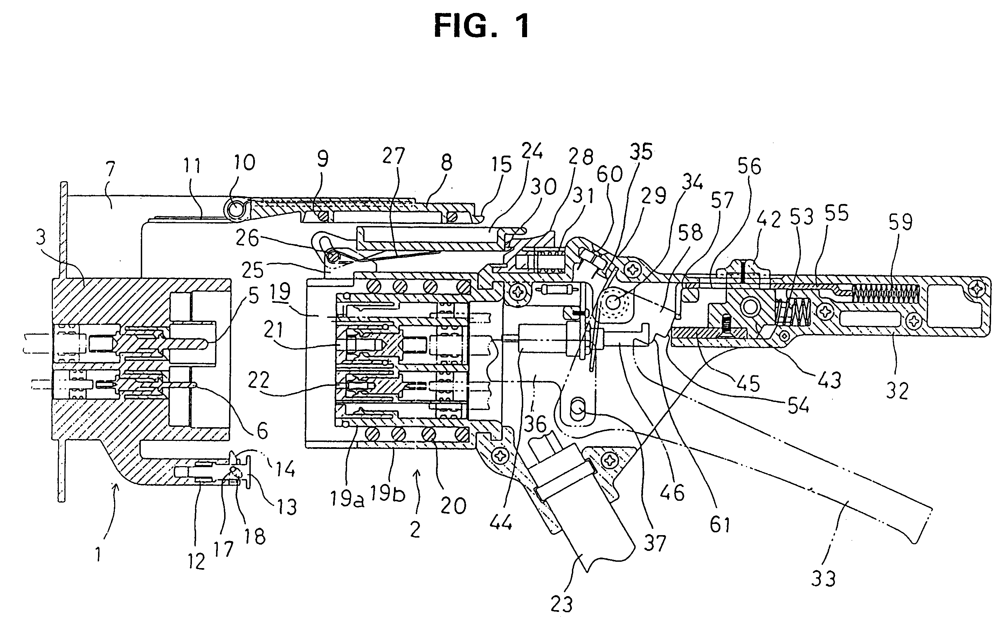

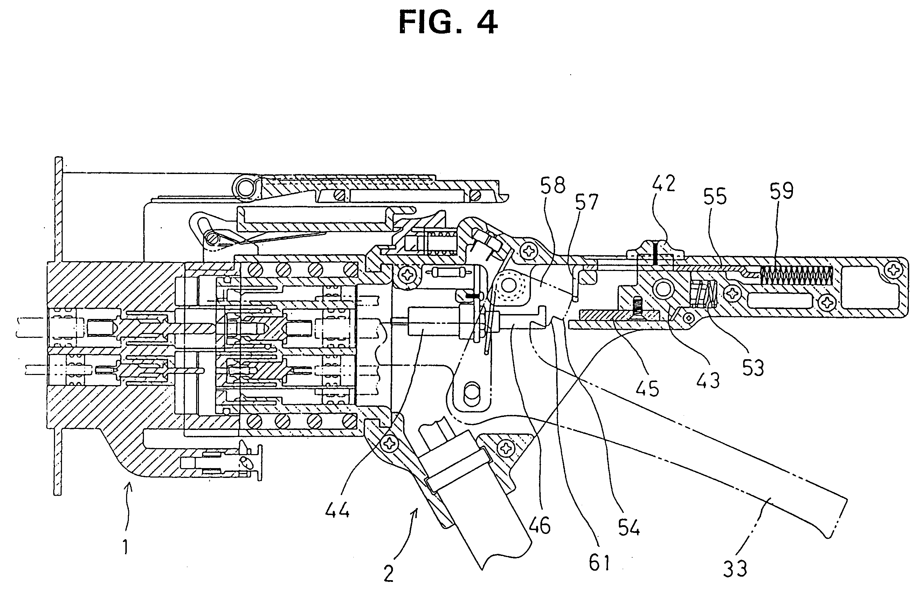

In this embodiment, the slide switch 42 has three positions: on-position (FIG. 6(B)), off-position (see FIGS. 1, 2 and 6(A)) and return-position (see FIGS. 4 and 6(C)). The slide switch 42 is held in its on- and off-positions as follows. As shown in FIGS. 6(A) to 6(C), a through hole 49 is formed in the sliding member 43 of the slide switch 42, extending in a radial direction thereof. A spring 50 is mounted in the through hole 49, and balls 51 held at the opposite ends of the spring 50 are pressed against the inner wall of the grip shaft 32, respectively. On the other hand, a pair of recesses 52 are formed in the inner wall of the grip shaft 32 in positions corresponding to the on- and off-positions of the slide switch 42. The balls 51 stay in the corresponding recesses 52 to hold the slide switch 42 in its on- or off-position. A spring 53 is mounted at the rear end of the sliding member 43. The spring 53 acts to displace the slide switch 42 from its return-position to its off-position. Since an engaging force of the balls 51 and the recesses 52 is set larger than a spring force of the spring 53, the slide switch 42 is not moved from its off-position to its on-position only by the spring 53. However, when an operator renders a pressing force of a specified level or larger, the balls 51 and the recesses 52 can be disengaged.

The slide switch 42 cannot be moved to its on-position unless the connectors 1 and 2 are fully connected. More specifically, at the end of the lever 33 where a center of rotation is located, a surface 54 of the lever 33 facing the pressing plate 45 of the slide switch 42 acts as a first stopper surface 54. The first stopper surface 54 is in contact with the pressing plate 45 to hinder the slide switch 42 from moving to its on-position until the lever 33 is gripped to a position where it forms a specified angle with the grip shaft 32.

A lever lock plate 55 for locking the lever 33 in its full grip position during the charging operation is mounted in the grip shaft 32 horizontally in the longitudinal direction of the grip shaft 32. The plate 55 is formed in its upper surface with a hole 56 so as to avoid the interference with the sliding member 43. The leading end of the plate 55 is bent downward and formed with a retention hole 57 for retaining a portion of the lever 33 inserted thereinto. A portion of the lever 33 below the first stopper surface 54 is cut off to form a stepped portion. A portion of the lever 33 where the first stopper surface 54 is formed acts as an inserting portion 58 to be inserted into the retention hole 57. A surface 61 of the stepped portion below the inserting portion 58 acts as a second stopper surface 61 and prohibits the forward movement of the pressing plate 45 unless the lever 33 is gripped to its full grip position. On the other hand, the rear end of the plate 55 is pressed by a spring 59, and the plate 55 is biased in the forward direction. However, as shown in FIG. 1, the plate 55 is normally in contact with the first stopper surface 54 and thus the forward movement thereof is prohibited. When the lever 33 is gripped to its full grip position and the first stopper surface 54 faces the retention hole 57 accordingly, the inserting portion 58 is inserted into the retention hole 57, with the result that the lever 33 is locked in its full grip position.

Identified by 60 is a lamp which is turned on when the charging circuit is turned on.

Next, the action and effect of the thus constructed embodiment is specifically described. First, when the operation shaft 13 of the vehicle-side connector 1 is pressed, the projection 17 is displaced along the cam groove 18, thereby lowering the stopper shaft 14. The stopper shaft 14 is then disengaged from the claw 15 of the lid 8, and thereby the lid 8 pivots up by the torsion spring 11 and is held there in its open position. On the other hand, the lid 24 of the charge connector 2 is rotated upward to its open position against the force from the torsion spring 27, and is held in its open position by engaging the lock member 28 with the engaging edge 30 of the lid 24.

After the above operation, the grip shaft 32 is gripped to bring the charge connector 2 to a position where the inner housing 19a of the charge connector 2 faces the opening of the housing 3 of the vehicle-side connector 1, and the charge connector 2 is pressingly inserted by a desired distance (partially connected state). In the partially connected state, the charge connector 2 is partially retained by the engagement of corresponding recesses and projections which are not shown in detail. At this stage, since the leading ends of the stays 36 are wide open as shown in FIG. 5(A), the stays 36 do not interfere with the projections 39 of the vehicle-side connector 1.

Next, the lever 33 is gripped to move the stays 36 backward, the opening edges of the engaging holes 38 slides in contact with the slanted surfaces 41 of the guide projections 41. Thus, the stays 36 are gradually caused to deform in the contracting direction, and consequently the engaging holes 38 of the stays 36 fit over the respective projections 39. The stays 36 are moved further backward, if the lever 33 is further gripped. Accordingly, there is exerted a force to pull the vehicle-side connector 1. As a reaction, the charge connector 2 is pressed further into the vehicle-side connector 1, thereby assisting the connection thereof. At the end, the connectors 1 and 2 are brought into a fully connected state where the terminals of the connector 1 are properly engaged with the corresponding terminals of the connector 2.

Before the fully connected state is reached, the slide switch 42 cannot be moved to its on-position since the balls 51 are engaged with the recesses 52 and the pressing plate 45 is in contact with the first stopper surface 54 of the lever 33 as shown in FIG. 1. This prevents the power application from being mistakenly started before the connectors 1 and 2 are fully connected. Likewise, the forward movement of the lever lock plate 55 is prohibited by the first stopper surface 54 which is in contact with the leading end of the lever lock plate 55.

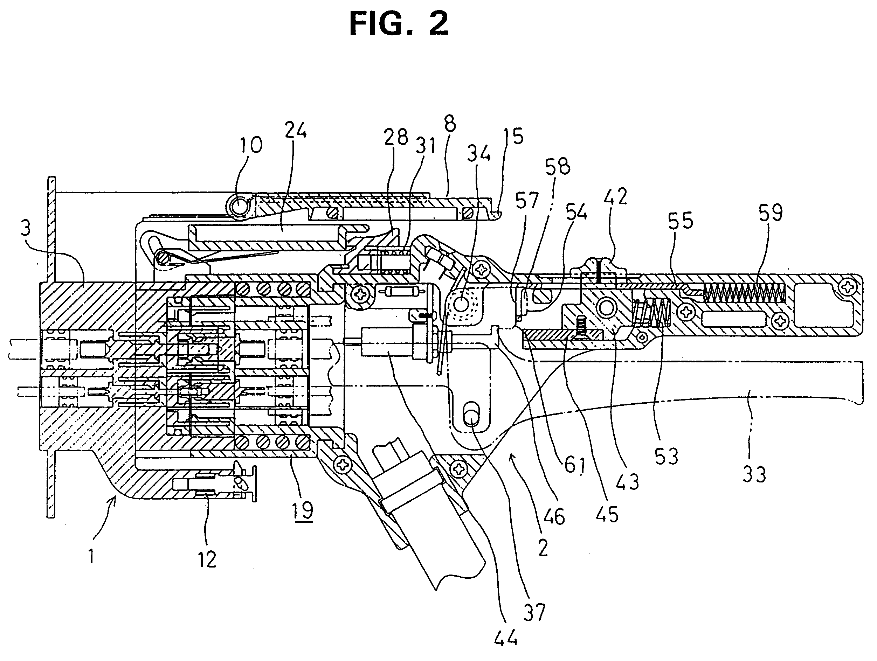

Upon reaching the fully connected state, the inserting portion 58 of the lever 33 is in a face-to-face relationship with the retention hole 57 of the plate 55. Accordingly, the plate 55 is moved forward by the spring 59, and the inserting portion 58 is inserted into the retention hole 57 as shown in FIG. 2. As a result, the lever 33 is locked in its full grip position, thereby releasing the operator from the cumbersomeness of continuously gripping the lever 33 during the charging operation.

When the lever 33 is brought into its full grip position, the second stopper surface 61 is displaced to the height where it permits the forward movement of the pressing plate 45. However, the balls 51 hold the slide switch 42 in its off-position. If the slide switch 42 is moved by an operator from its off-position to its on-position in this state, the balls 51 are fitted and retained in the recesses 52 corresponding to the on-position of the slide switch 42. When the slide switch 42 is moved to its on-position, the pressing plate 45 presses the contact 46 of the micro-switch 44. Thereby, the charging controller 48 closes the charging circuit to apply power to the battery 4 of the vehicle.

As described above, in this embodiment, the charging operation can be safely conducted since the application of power is permitted only after the terminals of the connectors 1 and 2 are fully connected. Further, since the terminals are not displaced after the start of the power application and therefore no spark is generated, the terminals can be protected. Furthermore, as the lamp 60 is on during this time, the operator can easily confirm that the charging operation is being conducted.

Upon the completion of the charging operation, the slide switch 42 is moved backward to its return-position, thereby bringing the pressing plate 45 away from the micro-switch 44 to stop the power application to the charging circuit. Further, the lever lock plate 55 is moved backward against the spring 59 by moving the slide switch 42 backward to its return-position. Accordingly, the inserting portion 58 of the lever 33 comes out of the retention hole 57, and the lever 33 automatically returns to its initial position due to the spring force from the torsion spring 35. Thus, when the stays 36 are moved forward during the withdrawal of the charge connector 2, the stays 36 return to their initial wide open positions in the order opposite from the above-mentioned order. Particularly, the stays 36 are disengaged from the projections 39. Upon disengaging the charge connector 2 from the vehicle-side connector 1, the withdrawal of the charge connector 2 is completed.

A variety of changes and modifications can be made in the invention. For example, the following modifications can be made. Although the stopper surfaces are formed on the lever 33 in the foregoing embodiment, they may be formed in other positions, or other means may be provided. In other words, any means may be provided in any positions provided that it normally prohibits the movement of the slide switch 42 to its on-position and permits such a movement upon detecting that the connectors 1 and 2 are fully connected.

### LIST OF REFERENCE NUMERALS

- 1: Vehicle-Side Connector
- 2: Charge Connector
- 32: Grip Shaft
- 33: Lever
- 36: Stay
- 42: Slide Switch
- 44: Micro-Switch
- 57: Retention Hole
- 58: Inserting Portion

## Claims

1. A charge connector connectable with a vehicle-side connector (1) secured on an electric vehicle, comprising:
a grip shaft (32) extending substantially in the longitudinal direction of the charge connector (2) at its rear side,
a lever (33) mounted on the grip shaft (32) to be gripped therewith, and
connection assisting means (33,36) for assisting the connection of the charge connector (2) and the vehicle-side connector (1) by relatively moving the charge connector (2) closer to the vehicle-side connector (1) as the lever (33) is gripped more until the charge connector (2) and the vehicle-side connector (1) are fully engaged.

2. A charge connector according to claim 1, wherein the connection assisting means comprises at least one stay (36) connected with the lever (33) and having engaging means (38) for engaging the vehicle-side connector (1).

3. A charge connector according to claim 2, wherein the stay (36) extends between an inner surface of the charge connector (2) and an outer surface of the vehicle-side connector (1) and wherein, when the stay (36) is moved by gripping the lever (33), the engaging means (38) engages the outer surface of the vehicle-side connector so that the connectors (1,2) move relatively to each other.

4. A charge connector according to claim 3, wherein the outer surface of the vehicle-side connector (1) is provided with a projection (39) which is engaged by an engaging hole (38) forming the engaging means of the stay (36).

5. A charge connector according to claim 4, wherein there are provided two stays (36) on opposite lateral sides of the charge connector (2), each being provided with an engaging hole (38) to engage a corresponding projection (39) of the vehicle-side connector (1).

6. A charge connector according to any of claims 1 to 5, wherein the charge connector (2) is provided with locking means (58, 57) for locking the lever (33) in its full grip position.

7. A charge connector according to claim 6, wherein a lever lock plate (55) is mounted in the charge connector (2) and is provided with a retention hole (57), and wherein the lever (33) comprises an inserting portion (58) which is engageable with the retention hole (57) so as to lock the lever (33) in its full grip position.

8. A charge connector according to claim 7, wherein the lever lock plate (55) is biased by a spring (59) so that the retention hole (57) automatically engages the inserting portion (58) when the lever (33) reaches its full grip position.

9. A charge connector according to any of claims 6 to 8, wherein the charge connector (2) further comprises switch means (42,44) which is operated to open and close a charging circuit (47,48) for stopping and supplying a charging current to the battery (4), respectively.

10. A charge connector according to claim 9, wherein the switch means (42,44) can be switched on so as to close the charging circuit (47,48), only when the lever (33) has reached its full grip position.

11. A charge connector according to claim 10, wherein the switch means comprises a shift switch (42) to be operated by an operator and a micro-switch (44) operated by the shift switch (42) via a pressing plate (45) and wherein a stopper surface (54) of the lever (33) prevents the micro-switch (44) from being operated unless the lever (33) has reached its full grip position.

12. A charge connector according to claim 11, wherein the stopper surface (54) is arranged at the same side of the lever (33) with respect to a pivot point (34) thereof as the inserting portion (58).

13. A charge connector according to claim 11 or 12, wherein the shift switch (42) has three shift positions: an on-position in which the charging circuit is closed, an off-position in which the charging circuit is open, and a return position in which the charging circuit is open and the locking means (58,57) is released.

14. A charge connector according to claim 13, wherein the shifting order of the shift switch (42) is on-position, off-position, return position and vice versa.
